# EUROPÄISCHE PATENTSCHRIFT

(11) **EP 3 582 639 B1**
(45) Veröffentlichungstag und Bekanntmachung des Hinweises auf die Patenterteilung: **29.05.2024**
(21) Anmeldenummer: 18704497.9
(22) Anmeldetag: 05.02.2018
(51) Int. Cl.: A23N 5/00

(54) **VERFAHREN UND VORRICHTUNG ZUR BEHANDLUNG VON SCHALENFRÜCHTEN, INSBESONDERE ZUR HERSTELLUNG VON SCHALENFRÜCHTEN MIT VERBESSERTEN SCHÄLEIGENSCHAFTEN**
METHOD AND DEVICE FOR TREATMENT OF NUTS ETC., IN PARTICULAR FOR PRODUCING NUTS ETC. WITH IMPROVED PEELABILITY
PROCEDE ET DISPOSITIF POUR LE TRAITEMENT DE FRUITS À COQUE, EN PARTICULIER POUR LA PRODUCTION DES FRUITS À COQUE AVEC DES PROPRIETES DE DECORTIQUAGE AMELIOREES

(30) Priorität: 20.02.2017 DE 102017202684
(43) Veröffentlichungstag der Anmeldung: 25.12.2019
(73) Patentinhaber: Elea Service GmbH, 49610 Quakenbrück (DE)
(72) Erfinder: ROEDER, Isabell, 27232 Sulingen (DE); VÖLKEL, Vanessa, 49565 Steinfurt (DE); TÖPFL, Stefan, 49076 Osnabrück (DE)
(74) Vertreter: Grünecker Patent- und Rechtsanwälte PartG mbB
(86) Internationale Anmeldenummer: PCT/EP2018/052739
(87) Internationale Veröffentlichungsnummer: WO 2018/149675

(56) Entgegenhaltungen:
- DE-B- 1 179 037
- GB-A- 750 345
- US-A- 2 601 421
- US-A- 2 661 784
- US-A- 2 685 312
- US-A- 2 747 635

## Beschreibung

Die vorliegende Erfindung betrifft ein Verfahren zum Behandeln von Schalenfrüchten, insbesondere zum Herstellen von Schalenfrüchten mit verbesserten Schäleigenschaften im Vergleich zu unbehandelten Schalenfrüchten.

Die vorliegende Erfindung betrifft ferner eine Vorrichtung zur Behandlung von Schalenfrüchten, insbesondere zur Herstellung von Schalenfrüchten mit verbesserten Schäleigenschaften im Vergleich zu unbehandelten Schalenfrüchten, umfassend eine luftdicht verschließbare Behandlungskammer zur Konditionierung der Schalenfrüchte.

Schalenfrüchte, auch Schalenobst genannt, ist eine Sammelbezeichnung für meist essbare Nüsse und Kerne. Als gemeinsames Merkmal besitzen diese Schalenfrüchte eine Fruchtwand, die in der Regel nicht verzehrt werden kann. Nur der Kern (auch Fruchtkern, Fruchtkörper), also der Samen, ist meist essbar. Schalenfrüchte bieten ein Reservoir an Inhaltsstoffen, die in der Lebensmittelindustrie bzw. chemischen Industrie einsetzbar sind. Zudem werden essbare Fruchtkerne von Schalenfrüchten in der Gastronomie und Lebensmittelgeschäften nachgefragt.

Für den Verzehr von Fruchtkernen von Schalenfrüchten, beispielsweise Cashewnüssen oder Paranüssen, ist es wünschenswert, den Fruchtkern intakt von der nicht essbaren Schale zu trennen. Herkömmliche Verfahren behandeln Schalenfrüchte vor dem Schritt des Schälens, bei dem die nicht essbare Schale/Fruchtwand aufgebrochen und der Kern zugänglich gemacht wird, mit thermischen Verfahren, beispielsweise indem die Schalenfrüchte erwärmt oder mit heißem Dampf konditioniert werden, bevor sie geschält werden.

Allerdings verbleibt selbst bei einer thermischen Vorbehandlung von Schalenfrüchten ein relativ hoher Prozentsatz von Fruchtkernen, die sich nicht vollständig intakt, also im Ganzen, von ihrer Schale trennen lassen. Derartige Bruchware ist wertmindernd, so dass man bestrebt ist, den Prozentsatz an Bruchware zu minimieren.

Darüber hinaus können thermische Verfahren mit hohen Temperaturen insofern nachteilig sein, als sich dabei wertvolle Inhaltsstoffe der Schalenfrüchte, beispielsweise bestimmte Öle, thermisch zersetzen.

Aus dem Stand der Technik sind zahlreiche Verfahren und Vorrichtungen bekannt, welche den Schälvorgang von Schalenfrüchten optimieren sollen. Beispielsweise sind hier die GB 860,967 und die WO 2016/157215 A1 genannt. Die darin beschriebenen Maschinen lösen allerdings nicht das Problem einer Bruchbildung beim Trennen der aufgebrochenen Schale vom Fruchtkern.

In der DE 1 179 037 B ist ein Verfahren zum Schälen und Enthäuten von nussartigen Samen, Samen von Hülsenfrüchten, beschrieben. Dabei werden die Samen unter gleichzeitiger oder unmittelbar vorausgegangener Einwirkung äußerer Wärmequellen der Einwirkung eines hochfrequenten elektrischen oder elektrischen Feldes ausgesetzt. Durch die gleichzeitige Einwirkung des Hochfrequenzfeldes erhitzt der Samenkern und dabei entsteht Wasserdampf, wodurch die Schale bzw. Haut wegen ihrer Sprödigkeit an Bruchstellen auseinanderbricht.

In US 2 601 421 A ist ein Verfahren zum Schälen von Nüssen beschrieben, bei welchem die Nüsse zwischen zwei Elektrodenplatten hindurch fallen, zwischen denen ein elektrostatisches Feld hoher Frequenzen angelegt wird. Das Feld verdampft Flüssigkeiten innerhalb der Nüsse und erzeugt einen so explosiven Druck, dass die Nussschale aufplatzt.

Zudem ist die Verwendung elektrischer Felder zur Schwächung der Schale vor dem Schälen von Schalenobst mittels Stromdurchschlägen aus der US-2685312, der US-2747635 und der US-2661784 bekannt.

Angesichts der oben genannten Probleme ist es die Aufgabe der vorliegenden Erfindung, ein Verfahren und eine Vorrichtung zur Behandlung von Schalenfrüchten bereitzustellen, welche die Inhaltsstoffe des Fruchtkernes nicht zersetzen und gleichzeitig ermöglichen, dass sich die Schalenfrüchte besser schälen und die aufgebrochene Schale besser vom Fruchtkern abtrennen lässt.

Die vorliegende Erfindung löst diese Aufgabe durch ein Verfahren zur Behandlung von Schalenfrüchten der eingangs genannten Art, welches den folgenden Behandlungsschritt der Schalenfrüchte umfasst: a) Erweichen der Schale um einen Fruchtkörper der Schalenfrüchte durch Anlegen eines elektrischen Feldes, wobei die Schale mittels kurzer elektrischer Pulse im Mikro- bis Millisekundenbereich einer hohen Spannung im Kilovolt-Bereich nicht-thermisch erweicht wird.

Die eingangs genannte Vorrichtung zur Behandlung von Schalenfrüchten löst diese Aufgabe dadurch, dass sie wenigstens einen Kondensator zur Erzeugung eines nicht-thermisch wirkenden elektrischen Feldes in der Behandlungskammer umfasst, wobei der Kondensator wenigstens zwei Elektroden umfasst, die mit einem Hochspannungsimpulsgenerator verbunden sind, der elektrische Felder in Form von kurzen Pulsen im Mikro- bis Millisekundenbereich einer hohen Spannung im Kilovolt-Bereich erzeugt.

Es hat sich gezeigt, dass sich die Schale und die innere Haut der Schalenfrüchte durch Anlegen eines elektrischen Feldes erweicht. Erweichen bedeutet, dass die Stützstruktur, beispielsweise Membranen bzw. Stützskelette der Schalenfruchtzellen, geschwächt wird, was unter anderem dazu führt, dass Inhaltsstoffe, wie Öle, aus den Zellen austreten. Das Erweichen der Schalenfrüchte erleichtert zudem das Schälen derselben. Die Fruchtkerne lassen sich einfacher von der Schale entfernen, da die Fruchtkörper weniger spröde werden und die innere Haut, welche die Fruchtkerne umschließt, perforiert wird. Das angelegte elektrische Feld ist ein nicht-thermisch wirkendes elektrisches Feld, bei dem die Energieobergrenze so bemessen ist, dass im Wesentlichen keine Erwärmung der Schalenfrüchte im Sinne einer ohmschen Erhitzung stattfindet.

Unter verbesserten Schäleigenschaften der erfindungsgemäß behandelten Schalenfrüchte im Vergleich zu unbehandelten Schalenfrüchten ist zu verstehen, dass sich die behandelten Schalenfrüchte leichter, also bei günstigeren Bedingungen, beispielsweise geringerem Druck oder einfacheren Bedingungen, schälen lassen und/oder die Fruchtkerne zu einem höheren Prozentsatz in einem Stück von der Schale getrennt werden können.

Die Erfindung kann mit den folgenden, jeweils für sich vorteilhaften und beliebig miteinander kombinierbaren Weiterentwicklungen und vorteilhaften Ausgestaltungen weiter verbessert werden.

Beim Anlegen des elektrischen Feldes kann ein Energieeintrag von wenigstens 1 kJ/kg in die Schalenfrüchte erfolgen. Ein Energieeintrag in dieser Größenordnung ist besonders gut geeignet, um die Schale der Schalenfrüchte zu erweichen und von dem Kernabzutrennen bzw. die Inhaltsstoffe besonders effektiv zu extrahieren. Um den Energieeintrag ferner zu optimieren und eine unnötige Überbehandlung der Schalenfrüchte zu vermeiden, kann der Energieeintrag in die Schalenfrüchte vorzugsweise von 3 bis 8 kJ/kg Schalenfrüchte betragen.

Es hat sich gezeigt, dass es vorteilhaft ist, wenn ein elektrisches Feld von 0,5 kV/cm bis 2 kV/cm angelegt wird. Derartige Feldstärken lassen sich mit handelsüblichen industriellen Kondensatoren erzielen, und vermeiden, dass unerwünschte thermische Effekte auftreten, die zu nicht erwünschten Produktänderungen führen.

Mittels elektrischer Pulse kann der Fruchtkörper besonders effektiv erweicht werden. Das elektrische Feld, also die elektrischen Pulse, können sowohl durch Direktkontakt des Kondensators bzw. dessen Elektroden mit den Schalenfrüchten, als auch über leitende Fluide erzeugt werden, wobei die Schalenfrüchte ganz oder teilweise in die leitenden Fluide eingelegt werden. Dabei können verschiedene Elektrodenformen zur Anwendung kommen, beispielsweise Platten- Ring-, Gitter-, Hohl- oder Durchflusselektroden. Als Impulsgenerator wird ein Hochspannungsimpulsgenerator eingesetzt, der elektrische Felder in Form von kurzen Pulsen in Mikro- bis Millisekundenbereichen einer hohen Spannung im Kilovolt-Bereich erzeugt. Derartige Hochspannungsimpulse bewirken bei den zu behandelnden Schalenfrüchten eine Elektroporation, was insbesondere eine Permeabilisierung der Zellmembran zur Folge hat, welche den Austritt von Inhaltsstoffen, wie Ölen, erleichtert und die Struktur der Fruchtkörper auf besonders einfache und nicht-thermische Art und Weise erweicht. Im Sinne einer Zeit- und Energieoptimierung, kann der Fruchtkörper mit wenigstens 10 elektrischen Pulsen, vorzugsweise 10 bis 200 elektrischen Pulsen, und besonders bevorzugt 30 bis 50 elektrischen Pulsen erweicht werden.

Gemäß einer weiteren Ausführungsform umfasst das erfindungsgemäße Verfahren den weiteren Behandlungsschritt b) des Konditionierens der Schalenfrüchte. Unter einer Konditionierung ist eine Anpassung der Schalenfrüchte an deren Weiterverarbeitung gemeint. Das erfindungsgemäße Verfahren zur Behandlung von Schalenfrüchten bzw. die erfindungsgemäße Vorrichtung können insbesondere im Zusammenhang mit der Herstellung von Schalenfrüchten mit verbesserten Schäleigenschaften, aber auch im Hinblick auf eine verbesserte Extraktion von Inhaltsstoffen, eine verbesserte Entfernung von unerwünschten Inhaltsstoffen, beispielsweise Toxinen, eingesetzt werden.

Gemäß einer Ausführungsform können die Schalenfrüchte durch Anlegen eines Überdrucks und/oder einer Erhöhung der Temperatur und/oder Einwirkung eines Konditionierungsmittels oder -agenses konditioniert werden. Die erfindungsgemäße Vorrichtung kann zu diesem Zwecke neben der luftdicht verschließbaren Behandlungskammer ein Heizelement umfassen und/oder eine in der Behandlungskammer mündende Dosiereinleitung aufweisen. Unter einer luftdicht verschließbaren Behandlungskammer ist eine Kammer zu verstehen, welche so ausgestaltet werden kann, dass darin ein Überdruck erzeugt und gehalten werden kann. Um den Überdruck in der Behandlungskammer zu regeln, kann die erfindungsgemäße Vorrichtung einen Druckregler, beispielsweise ein Überdruckventil aufweisen.

Gemäß einer weiteren Ausführungsform des erfindungsgemäßen Verfahrens kann der Schritt a) des Anlegens des elektrischen Feldes gleichzeitig mit oder vor dem Schritt b) des Konditionierens durchgeführt werden. Beim gleichzeitigen Anlegen des elektrischen Feldes und Konditionierens wird von zeitlicher Warte aus ein Verfahrensschritt eingespart und die Behandlungsdauer kann insgesamt reduziert werden. Bei einem Konditionieren nach Anlegen des elektrischen Feldes können die beiden Schritte besser aufeinander abgestimmt und im Hinblick auf anschließende Behandlungsschritte besser optimiert werden.

Gemäß einer weiteren Ausführungsform kann im Schritt b) die Temperatur auf über 100° C, vorzugsweise auf 100° C bis 120° C erhöht werden. Eine derartige Temperaturerhöhung führt beispielsweise bei der Behandlung von Cashewnüssen dazu, dass damit unerwünschte Toxine zuverlässig thermisch zersetzt werden können, ohne erwünschte Inhaltsstoffe, beispielsweise Öle, zu schädigen. Zudem fördert diese thermische Art des Konditionierens ein verbessertes Schälen bzw. Lösen des Fruchtkörpers von der Schale der Schalenfrüchte.

Gemäß einer weiteren Ausführungsform kann im Schritt b) ein Überdruck von wenigstens 1 bar, vorzugsweise ein Überdruck von 1 bis 3 bar angelegt werden, was sich ebenfalls förderlich im Hinblick auf den Austritt und die anschließende Gewinnung von Zellinhaltsstoffen auswirkt. Gemäß einer Ausführungsform kann im Schritt b) sowohl die Temperatur auf über 100° C, vorzugsweise auf 100° C bis 120° C erhöht als auch ein Überdruck von wenigstens 1 bar, vorzugsweise 1 bis 3 bar, angelegt werden.

Es hat sich herausgestellt, dass die Behandlungsdauer im Schritt b) des Konditionierens unter 40 Minuten, vorzugsweise unter 30 Minuten, und besonders bevorzugt unter 20 Minuten betragen kann, was den Durchsatz des Behandlungsverfahrens bzw. der erfindungsgemäßen Vorrichtung zugutekommt. Eine reduzierte Behandlungsdauer ist auch aus energetischer Sicht vorteilhaft.

Gemäß einer weiteren Ausführungsform kann im Schritt b) eine Dampfbehandlung, beispielsweise eine Wasserdampfbehandlung erfolgen. Eine Dampfbehandlung kombiniert in vorteilhafter und einfacher Weise die Konditionierung mittels Temperatur- und Druckerhöhung. Der Dampf als Fluidmedium kann dabei die Schalenfrüchte als Behandlungsgut besonders gut durchdringt. Zudem kann, sofern Wasserdampf bei Überdruck einwirkt, auf einfache, zuverlässige und aus Lebensmittelsicht unbedenklicher Art und Weise im besonders bevorzugten Temperatur- bzw. Überdruckrahmen, der oben beschrieben wurde, verfahren werden.

Das erfindungsgemäße Verfahren kann, gemäß einer weiteren Ausführungsform, wenigstens einen der folgenden, sich an die Behandlungsschritte a) und gegebenenfalls b) anschließenden Schritte umfassen:
c) Schälen der behandelten Schalenfrüchte;
d) Trocknen der Schalenfrüchte, vorzugsweise der geschälten Schalenfrüchte;
e) Entfernen einer Haut der Schalenfrüchte;
f) Abtrennen der Fruchtkörper vom Rest der Schalenfrucht;
g) Zerkleinern der Schalenfrüchte; und
h) Extraktion eines Inhaltsstoffes, vorzugsweise aus dem Rest der Schalenfrucht, wobei der Inhaltsstoff bevorzugt ein Öl ist.

Je nach dem, im Zusammenhang mit welchem Ziel das erfindungsgemäße Verfahren zum Behandeln von Schalenfrüchten eingesetzt ist, kann einer oder können mehrere der Schritte c) bis g) auf die Behandlungsschritte a) und b) folgen. Wird das erfindungsgemäße Verfahren beispielsweise im Zusammenhang mit einem Verfahren zur Gewinnung eines Inhaltsstoffes aus einer Schalenfrucht eingesetzt, könnte beispielsweise lediglich obiger Schritt h) bzw. die Schritte g) und h) nachfolgen. Setzt man das erfindungsgemäße Verfahren im Zusammenhang mit der Herstellung von Fruchtkörpern und von Schalenfrüchten ein, könnten sich die Schritte c) und f) bzw. die Schritte c) bis f) anschließen.

Die zu behandelnde Schalenfrucht kann beispielsweise ausgewählt sein aus der Gruppe bestehend aus: Buchecker, Nuss, Kastanie, Edelkastanie (Maroni), Eichel, Mandel, Pistazie, Pinienkerne, Kerne, Aprikosenkerne, Kokosraspeln. Eine Nuss im Sinne der vorliegenden Erfindung umfasst nicht nur Nüsse im botanischen Sinne, sondern auch im sprachlichen Sinne. So kann die Schalenfrucht beispielsweise eine Nuss sein, die vorzugsweise ausgewählt ist aus der Gruppe bestehend aus: Haselnuss, Walnuss, Erdnuss, Hanfnuss, Macadamianuss, Platanennuss, Steinnuss, Wassernuss, Cashewnuss, Paranuss, Pekannuss, Sheanuss, Marulanuss, Kokosnuss, Muskatnuss.

Im Folgenden wird die Erfindung anhand vorteilhafter Ausgestaltungen mit Bezug auf die Zeichnungen und nachfolgende Versuchsbeispiele beispielhaft näher erläutert. Die dabei dargestellten vorteilhaften Weiterentwicklungen und Ausgestaltungen sind jeweils voneinander unabhängig und können beliebig miteinander kombiniert werden, je nach dem, wie es im Anwendungsfall notwendig ist.

Es zeigen:
- Fig. 1: ein beispielhaftes Verfahren zum Behandeln von Schalenfrüchten gemäß einer beispielhaften Ausführungsform;
- Fig. 2: eine beispielhafte Ausführungsform einer erfindungsgemäßen Vorrichtung zur Behandlung von Schalenfrüchten;
- Fig. 3: Abbildungen von Cashewnüssen, die einem elektrischen Feld sowie einer Dampfbehandlung ausgesetzt wurden;
- Fig. 4: Abbildungen von geschälten Cashewnüssen der Fig. 3;
- Fig. 5: eine vergrößerte Darstellung einer Cashewnuss, die lediglich mit Dampf und nicht mit einem elektrischen Feld behandelt wurde;
- Fig. 6: ein Balkendiagramm mit dem Feuchtigkeitsgehalt von Cashewnüssen, die mit Dampf behandelt bzw. einer Dampfbehandlung und einem elektrischen Feld ausgesetzt wurden, nach dem Schälen;
- Fig. 7: ein Balkendiagramm des Flüssigkeitsgehalts der Proben gemäß Fig. 6 nach einem zusätzlichen Trocknungsschritt; und
- Fig. 8.: Abbildungen geschälter Proben von Cashewnüssen, die lediglich einer Dampfbehandlung bzw. einer Dampfbehandlung und zusätzlich einem elektrischen Feld ausgesetzt wurden.

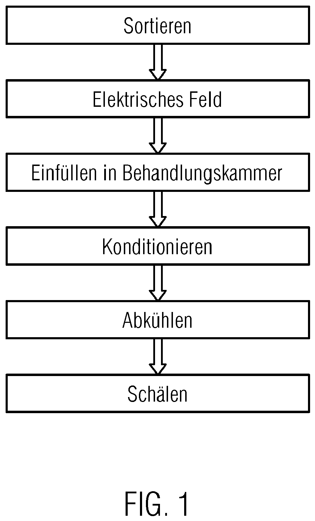

Nachfolgend wird ein beispielhaftes Verfahren zur Behandlung von Schalenfrüchten gemäß der vorliegenden Erfindung unter Bezugnahme auf das Fließdiagramm in Fig. 1 vorgestellt.

Dabei ist das erfindungsgemäße Verfahren zur Behandlung von Schalenfrüchten, umfassend ein Erweichen eines Fruchtkörpers der Schalenfrüchte durch Anlegen eines elektrischen Feldes in ein Verfahren zum Herstellen von Schalenfrüchten mit verbesserten Schäleigenschaften im Vergleich zu unbehandelten Schalenfrüchten eingebettet.

Das Fließdiagramm der Fig. 1 insgesamt stellt somit beispielhaft ein Verfahren zum Schälen von Schalenfrüchten, beispielsweise Nüssen, wie zum Beispiel Cashewnüssen, dar.

Bei handelsüblichen Verfahren zum Schälen von Nüssen, wie Cashewnüssen, werden die Nüsse in einem Schritt sortiert, beispielsweise in einem perforierten Zylinder, um Gruppen gleichmäßig großer Cashewnüsse zu erhalten.

Bei herkömmlichen Verfahren zum Schälen von Cashewnüssen findet nach dem Sortieren direkt das Einfüllen der Cashewnüsse in eine Behandlungskammer statt, in welcher die Cashewnüsse dann konditioniert werden. Die Konditionierung kann beispielsweise eine Dampfbehandlung bei Temperaturen von 110°C bis 116°C und einem Überdruck von 1,0 bar bis 2,5 bar bei einer Behandlungsdauer von 20 bis 30 Minuten erfolgen.

Nach der Dampfbehandlung werden die zu schälenden Nüsse abgekühlt, beispielsweise für 10 bis 12 Stunden bei Raumtemperatur und anschließend mittels einer Schälmaschine geschält.

Das erfindungsgemäße Verfahren zum Behandeln von Schalenfrüchten, insbesondere zum Herstellen von Schalenfrüchten mit verbesserten Schäleigenschaften im Vergleich zu unbehandelten Schalenfrüchten umfasst den Schritt des Erweichens eines Fruchtkörpers der Schalenfrüchte durch Anlegen eines elektrischen Feldes.

Im Fließschema des beispielhaften Verfahrens der Fig. 1 findet der Schritt des Erweichens durch Anlegen eines elektrischen Feldes zwischen dem Schritt des Sortierens und dem Einfüllen in die Behandlungskammer statt.

Wie nachfolgend erläutert werden wird, kann der Schritt des Anlegens eines elektrischen Feldes zum Erweichen eines Fruchtkörpers aber auch gleichzeitig mit dem Konditionieren in der Behandlungskammer erfolgen.

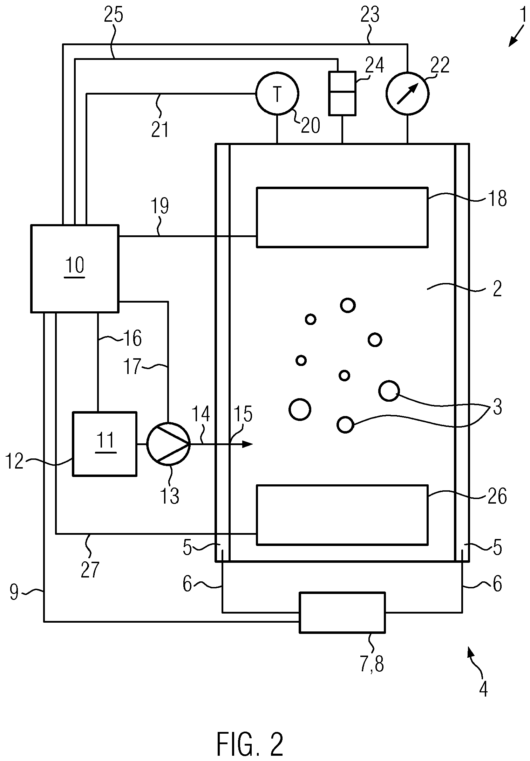

Eine Vorrichtung für solch eine Anwendung mit gleichzeitigem Anlegen eines elektrischen Feldes und Konditionieren der Schalenfrüchte in einer Behandlungskammer ist in einer beispielhaften Ausführungsform in Fig. 2 gezeigt.

Die in Fig. 2 gezeigte Vorrichtung 1 umfasst eine luftdicht verschließbare Behandlungskammer 2, in welche die Schalenfrüchte 3, beispielhaft als Kreise dargestellt, eingefüllt und konditioniert werden können. Die Vorrichtung 1 der Fig. 2 umfasst ferner einen Kondensator 4 zur Erzeugung eines elektrischen Feldes in der Behandlungskammer 2. Der Kondensator 4 in der gezeigten Ausführungsform umfasst zwei Elektroden 5, die über Energieleitungen 6 mit einer Spannungsquelle 7 verbunden sind. In der gezeigten Ausführungsform sind die beiden Elektroden 5 des Kondensators 6 an sich gegenüberliegenden Seiten und parallel zueinander angeordnet. Bei einer derartigen Elektrodenanordnung kann ein homogenes elektrisches Feld zur gleichmäßigen Probenbehandlung erzeugt werden. Es sind allerdings auch andere Varianten der Elektrodenanordnung denkbar, beispielsweise eine koaxiale oder kollineare Anordnung.

Als Spannungsquelle 7 kann ein Impulsgenerator, beispielsweise ein Hochspannungsimpulsgenerator wie ein Marx-Generator eingesetzt werden, mit dem elektrische Impulse einer hohen Spannung im Kilovoltbereich und einer kurzen Dauer im Mikro- bis Millisekundenbereich generiert werden können.

Zum Erweichen eines Fruchtkörpers können wenigstens 10 elektrische Pulse, vorzugsweise 10 bis 200 und besonders bevorzugt 30 bis 50 elektrische Pulse eingebracht werden. Bei Anlegen eines elektrischen Feldes von 0,5 bis 2 kV/cm erreicht man einen Energieeintrag von über 1 kJ, beispielsweise 5 bis 20 kJ/kg in die Schalenfrüchte.

Die Spannungsquelle ist über eine Steuerleitung 9 mit einer zentralen Steuereinheit 10 verbunden, welche die Spannungsquelle steuert.

In der Behandlungskammer 2 können die Schalenfrüchte 3 auf verschiedenste Arten konditioniert werden.

Eine erste Konditionierungsoption besteht darin, ein Konditionierungsagens oder -mittel 11 auf die Schalenfrüchte 3 einwirken zu lassen. In der beispielhaft gezeigten Ausführungsform ist das Konditionierungsagens 11 in einem Vorratsbehälter 12 aufbewahrt und kann mittels einer Pumpe 13 aus dem Vorratsbehälter 12 über eine Zuführleitung 14 durch eine in der Behandlungskammer 2 mündende Dosiereinleitung 15 eingebracht werden.

In der gezeigten Ausführungsform ist die Mündungsöffnung der Einleitung 15 beispielhaft in einer Seitenwand der Behandlungskammer 2 angeordnet. Es ist ebenso gut möglich, die Einlassöffnung im Bereich des Bodens oder der Decke der Behandlungskammer vorzusehen, oder mehrere Einlassöffnungen an verschiedenen Stellen der Behandlungskammer 2 vorzusehen.

Über Steuerleitungen 16 bzw. 17 ist der Vorratsbehälter 12, insbesondere ein Füllstandsanzeiger (nicht gezeigt) des Vorratsbehälters, welcher ein Signal ausgibt, wenn Konditionierungsagens nachzufüllen ist, bzw. die Pumpe 13 mit der zentralen Steuereinheit 10 verbunden. Auf diese Weise kann die Steuereinheit 10 die Pumpe 13 und somit die Zufuhr von Konditionierungsagens in die Behandlungskammer regeln bzw. ein Warnsignal ausgeben, wenn Konditionierungsmittel 11 in den Vorratsbehälter 12 nachzufüllen ist.

Eine weitere Konditionierungsmöglichkeit besteht darin, die Schalenfrüchte 3 zu erwärmen. Die beispielhaft gezeigte Vorrichtung 1 der Fig. 2 weist dafür ein Heizelement 18 auf. Das Heizelement 18 ist über eine weitere Steuerleitung 19 mit der Steuereinheit 10 verbunden, so dass die Steuereinheit 10 das Heizelement 8 ansteuern und mittels des Heizelementes 8 in der Behandlungskammer somit eine erwünschte Temperatur eingestellt werden kann. Ein geschlossener Regelkreis kann dadurch bewerkstelligt werden, dass die Vorrichtung 1 ferner eine Temperaturmessvorrichtung 20 umfasst, die über eine weitere Steuerleitung 21 ebenfalls mit der Steuereinheit 10 verbunden ist.

Eine weitere Art der Konditionierung kann gemäß der beispielhaften Vorrichtung 1 durch Anlegen eines Überdrucks erreicht werden. Die beispielhaft gezeigte Ausführungsform der Vorrichtung 1 umfasst ein Manometer 22, welches den Druck in der Behandlungskammer misst und über eine weiter Steuerleitung 23 an die Steuereinheit 10 ausgeben kann. Ferner umfasst die Vorrichtung 1 der beispielhaften Ausführungsform ein Druckventil 24, welches über eine weitere Steuerleitung 25 mit der Steuereinheit 10 verbunden ist. Über die Steuerleitung 25 kann die Steuereinheit 10 ein Steuersignal an das Druckventil 24 ausgeben und dieses öffnen bzw. schließen, um den Druck in der Behandlungskammer 2 einzustellen. Ein Überdruck kann in der Behandlungskammer beispielsweise durch Einleiten von Druckluft bzw. mittels eines Kompressors, welcher ein in der Behandlungskammer 2 befindliches Fluid komprimiert, erreicht werden (nicht gezeigt).

Die beispielhaft gezeigte Ausführungsform erzeugt den Überdruck dadurch, dass ein in die Behandlungskammer 2 eingeleitetes Konditionierungsagens 11, beispielsweise Wasser mittels des Heizelements 18 erwärmt wird. Da die Behandlungskammer 2 luft- bzw. fluiddicht verschließbar ist, kann sich beim Erwärmen des Konditionierungsagens 11 in der Behandlungskammer 2 ein Überdruck aufbauen. Auf diese Weise kann in der Behandlungskammer Wasserdampf einer Temperatur von 110°C bis 120°C und ein Überdruck von 1 bis 2,5 bar erzeugt werden.

Anstelle eines Manometers 22 und eines Druckventils 24, die beide über Steuerleitung 23, 25 mit einer Steuereinheit 10 verbunden sind, könnte auch lediglich ein Überdruckventil (nicht gezeigt) vorgesehen sein, das sich bei Überschreiten eines vorbestimmten Überdrucks öffnet und somit auf einfache Weise den Druck in der Behandlungskammer 2 auf einem vorbestimmten Wert hält.

Für eine homogene Verteilung der zu behandelnden Schalenfrüchte 3 weist die beispielhaft gezeigte Vorrichtung 1 einen Mischer 26 auf, beispielsweise eine Rühreinheit. Der Mischer 26 kann wiederum über eine Steuerleitung 27 mit der zentralen Steuereinheit 10 verbunden und von dieser gesteuert werden.

Nachfolgend werden anhand einiger konkreter Versuchsergebnisse beispielhafte Ausführungsformen des erfindungsgemäßen Verfahrens dargestellt.

Versuch 1: Behandeln von Schalenfrüchten mittels Dampfkonditionierens und Anwenden eines elektrischen Feldes zum Herstellen von Schalenfrüchten mit verbesserten Schäleigenschaften.

Bei dieser Versuchsreihe wurden Cashewnüsse als beispielhafte Schalenfrüchte eingesetzt.

Es wurden drei Probengruppen und eine Kontrollgruppe angefertigt:
Die Cashewnüsse aller Proben wurden einer Dampfbehandlung unterzogen. Dazu wurden 10 Nüsse in einen Dampfkessel mit 750 ml Wasser gefüllt. Im Dampfkessel fand eine Wasserdampfbehandlung von Temperaturen von 110 bis 116°C, einem Überdruck von 1,5 bar für eine Behandlungsdauer von 20 Minuten statt. Bevor die Konditionierung mittels Dampfbehandlung stattfand, wurden die Cashewnüsse folgendermaßen vorbehandelt:
a. unbehandelte Cashewnüsse (Kontrollprobe);
b. Cashewnüsse, in die ein Energieeintrag von 5 kJ/kg eingebracht wurde;
c. Cashewnüsse, in die ein Energieeintrag von 10 kJ/kg eingebracht wurde;
d. Cashewnüsse, in die ein Energieeintrag von 20 kJ/kg eingebracht wurde.

Für den Energieeintrag wurden die Cashewnüsse elektrischen Pulsen eines elektrischen Feldes von 1,07 kV/cm ausgesetzt. Je nach Probe wurden die Cashewnüsse mit 45 Pulsen (Probe b entsprechend 5 kJ/kg), 90 Pulsen (Probe c entsprechend 10 kJ/kg) und 181 Pulsen (Probe d entsprechend 20 kJ/kg) behandelt.

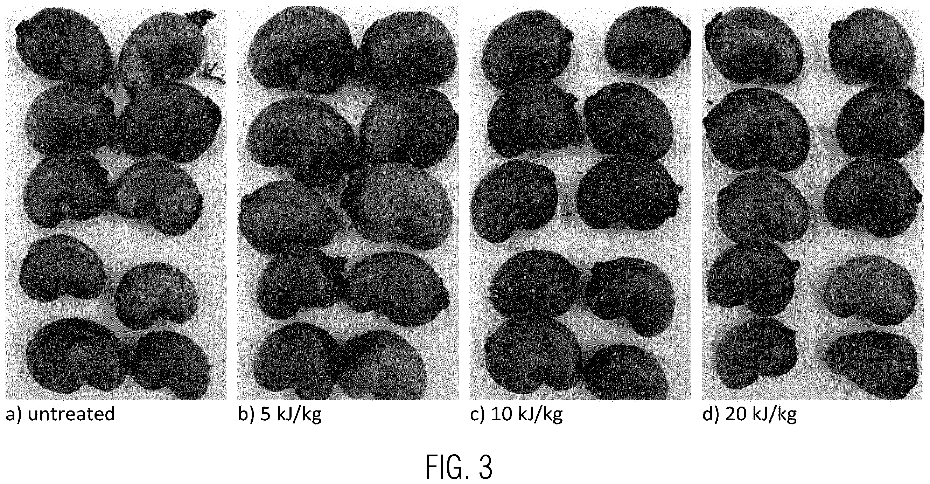

Fig. 3 zeigt das äußere Erscheinungsbild der Cashewnüsse nach deren Dampfbehandlung.

Wie in Fig. 3 zu erkennen ist, werden die Cashewnüsse umso dunkler, je mehr Energie mittels elektrischer Impulse eingebracht wurde. Die Verdunklung der Cashewnüsse ist ein Indiz dafür, dass die Fruchtkörper erweichen und Nussöle und Nusssäuren während der Dampfbehandlung aus den Zellen austreten.

Nachdem die konditionierten Nüsse über Nacht für etwa 18 Stunden bei Raumtemperatur abgekühlt wurden, wurden sie mittels eines Messers geschält.

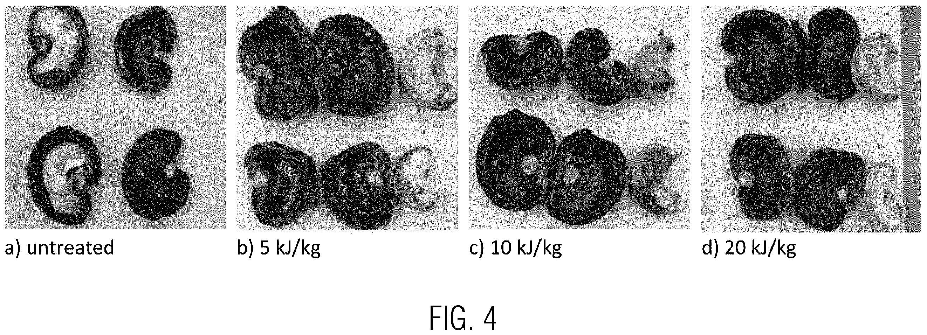

Abbildungen der geschälten Proben sind in Fig. 4 gezeigt. In Fig. 4 ist gut zu erkennen, dass sich die Nüsse, bei welchen die Fruchtkörper durch Anlegen eines elektrischen Feldes erweicht wurden, als Ganzes, ohne Brüche, auf einfache Weise aus der Schale herauslösen ließen. Die unbehandelte Probe, die lediglich einer Dampfkonditionierung und keinem elektrischen Feld ausgesetzt wurde, brach dagegen mehrfach beim Schälen und Versuch des Herauslösens des Fruchtkörpers aus der Schale.

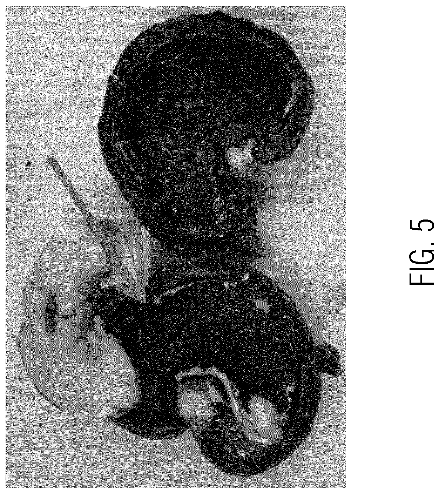

In Fig. 4 ist ferner zu erkennen, dass die Schalen der Proben, welche zusätzlich mit elektrischen Feldern behandelt wurden, mehr Feuchtigkeit aufweisen. Dies deutet auf den Austritt von Inhaltsstoffen, beispielsweise Ölen aus den Schalenfrüchten hin. Im Unterschied zu den Cashewnüssen, die mittels elektrischer Felder vorbehandelt wurden, brach bei den unbehandelten Proben oftmals die Cashewnuss beim Herauslösen aus der Schale (siehe Fig. 5), was unter anderem darauf zurückzuführen ist, dass bei den unbehandelten Proben die Epidermis der Nuss an der Schale haften blieb.

Diese Versuchsreihe hat somit gezeigt, dass mittels des erfindungsgemäßen Verfahrens Schalenfrüchte mit verbesserten Schäleigenschaften hergestellt werden können bzw. die Extraktion von Inhaltsstoffen der Schalenfrüchte verbessert werden kann.

Versuch 2: Verbesserung der Schäleigenschaften und Bestimmung des Feuchtigkeitsgehaltes von Schalenfrüchten am Beispiel von Cashewnüssen.

Bei dieser Versuchsreihe wurden der Feuchtigkeitsgehalt sowie die Schäleigenschaften von Cashewnüssen untersucht, bei denen mittels Anlegen eines elektrischen Feldes die Fruchtkörper erweicht wurden und die anschließend in einer Dampfbehandlung konditioniert wurden.

Dazu wurden folgende Kontrollgruppen bzw. Proben angefertigt:
a. eine erste Kontrollgruppe, die keinem elektrischen Feld ausgesetzt wurde und für 30 Minuten einer Dampfbehandlung unterzogen wurde;
b. eine zweite Kontrollgruppe, die keinem elektrischen Feld ausgesetzt wurde und für 20 Minuten einer Dampfbehandlung unterzogen wurde; sowie
c. eine Probe von Cashewnüssen, in die ein Energieeintrag von 5 kJ/kg elektrischer Energie eingebracht wurde, und die anschließend für 20 Minuten einer Dampfbehandlung unterzogen wurden.

Der Energieeintrag von 5 kJ/kg erfolgte durch Einwirken von 45 Pulsen eines elektrischen Feldes von 1,07 KV/cm. Die Pulsbreite betrug 5-50 µs, abhängig von der Füllmenge, der Leitfähigkeit und der Elektrodenkapazität.

Anschließend wurden die Nüsse der Proben- bzw. Kontrollgruppen einer Dampfbehandlung unterzogen, wie sie auch bei Versuchsreihe 1 erfolgte.

Nach der Dampfbehandlung wurden die Cashewnüsse in einem offenen Kessel für etwa zwölf Stunden bei Raumtemperatur abgekühlt und anschließend wurde der Feuchtigkeitsgehalt der Schalenfrüchte in einer Feuchtigkeitswaage mit Halogenheizung bestimmt.

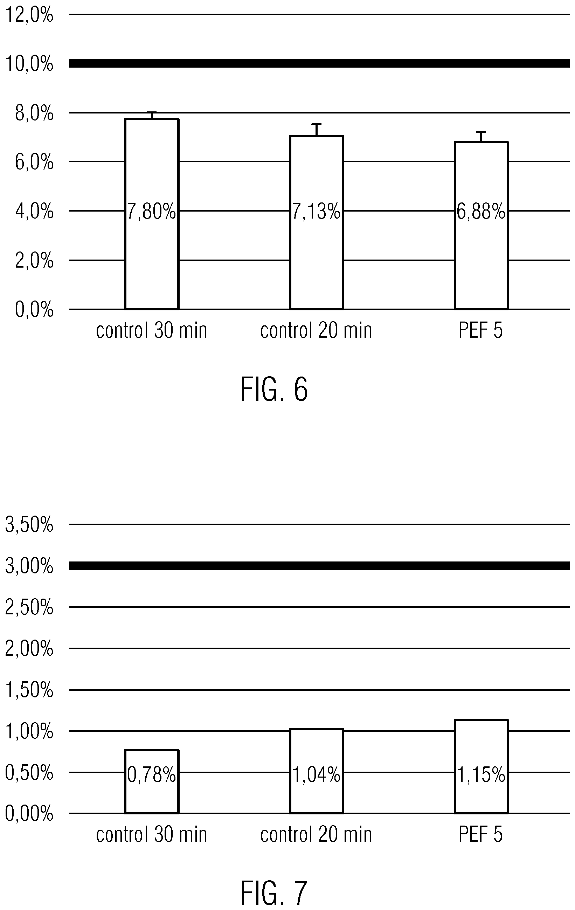

Die Feuchtigkeitsgehalte der verwendeten Proben sind in Fig. 6 dargestellt. Fig. 6 zeigt, dass die Feuchtigkeitsgehalte sämtlicher Proben unter einem Feuchtigkeitsgehalt von 10 % liegen, der für Cashewnüsse, welcher einer Dampfbehandlung unterzogen werden, üblich ist.

Nach dem Abkühlen wurden die Nüsse geschält.

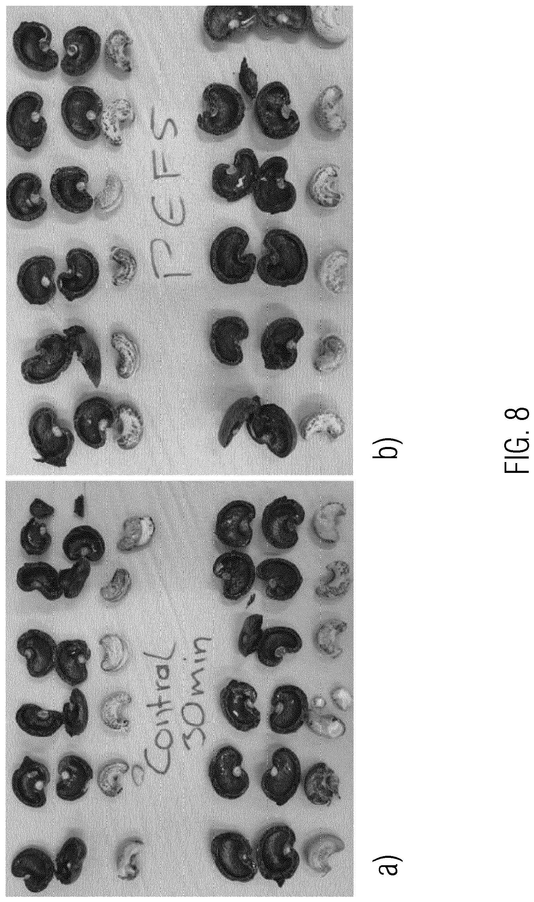

Abbildungen der Nüsse der Kontrollgruppe a) sowie der Probengruppe c) sind in Fig. 8a bzw. 8b dargestellt. Fig. 8 zeigt, dass die Nüsse der Kontrollgruppe, bei welchen die Fruchtkörper nicht durch Anlegen eines elektrischen Feldes erweicht wurden, oftmals beim Schälen und Herauslösen aus der Schalen brachen. Bei den gemäß dem erfindungsgemäßen Verfahren behandelten Nüssen konnten die Fruchtkörper dagegen einfach und in Gänze von der Schale getrennt werden.

Um die Schalenhaut von den Fruchtkörpern zu entfernen, wurden die Nüsse anschließend für sieben bis acht Stunden bei 72° C getrocknet.

Die Feuchtigkeitsgehalte der getrockneten Proben a) bis c) sind in Fig. 7 dargestellt. In jedem Fall lag der Feuchtigkeitsgehalt unter 3 %, was als Feuchtigkeitsgehalt für getrocknete Cashewnüsse üblich ist.

Abschließend wurden die getrockneten Cashewnüsse der Proben a) bis c) aus Versuchsreihe 2 einer sensorischen Prüfung unterzogen.

Bei einer visuellen Begutachtung ist zunächst festzustellen, dass die Nüsse der Gruppe a), welche 30 Minuten Dampfbehandlung unterzogen wurden, dunkler sind als die Nüsse der Gruppen b) und c), die weniger lang mit Dampf behandelt wurden.

Die geschmackliche Sensorikprüfung ergab folgende Ergebnisse:

| | |
|---|---|
| Kontrollgruppe a): | crisp, hart, Röstgeschmack, Geschmack erinnert an Erdnussgeschmack, kein Cashewgeschmack |
| Kontrollgruppe b). | crisp, hart, ohne Röstaromen, keine Cashewgeschmack |
| Kontrollgruppe c): | weicher als die Kontrollgruppen (gleichwohl harte Struktur vergleichbar handelsüblicher Cashewnusskerne), Cashewgeschmack |

Die obigen Versuchsbeispiele belegen beispielhaft, dass mittels des erfindungsgemäßen Verfahrens Schalenfrüchte behandelt werden können, beispielsweise um deren Schäleigenschaften zu verbessern oder um Inhaltsstoffe besser aus den Schalenfrüchten zu entfernen.

### Bezugszeichen

- 1: Vorrichtung
- 2: Behandlungskammer
- 3: Schalenfrüchte
- 4: Kondensator
- 5: Elektroden
- 6: Energieleitungen
- 7: Spannungsquelle
- 8: Impulsgenerator
- 9: Steuerleitung
- 10: Steuereinheit
- 11: Konditionierungsagens
- 12: Vorratsbehälter
- 13: Pumpe
- 14: Zuführleitung
- 15: Einführöffnung
- 16: Steuerleitung
- 17: Steuerleitung
- 18: Heizelement
- 19: Steuerleitung
- 20: Temperaturmesseinheit
- 21: Steuerleitung
- 22: Manometer
- 23: Steuerleitung
- 24: Druckventil
- 25: Steuerleitung
- 26: Mischer/Rühreinheit
- 27: Steuerleitung

## Patentansprüche

1. Verfahren zum Behandeln von Schalenfrüchten (3), insbesondere zum Herstellen von Schalenfrüchten (3) mit verbesserten Schäleigenschaften im Vergleich zu unbehandelten Schalenfrüchten (3), umfassend den folgenden Behandlungsschritt der Schalenfrüchte (3):
a) Erweichen einer Schale der Schalenfrüchte (3) durch Anlegen eines elektrischen Feldes, wobei die Schale mittels kurzer elektrischer Pulse im Mikro- bis Millisekundenbereich einer hohen Spannung im Kilovolt-Bereich nicht-thermisch erweicht wird.

2. Verfahren nach Anspruch 1, wobei bei Anlegen des elektrischen Feldes ein Energieeintrag von wenigstens 1 kJ/kg, vorzugsweise von 3 bis 8 kJ/kg in die Schalenfrüchte erfolgt.

3. Verfahren nach Anspruch 1 oder 2, wobei ein elektrisches Feld von 0,5 kV/cm bis 2 kV/cm angelegt wird.

4. Verfahren nach einem der Ansprüche 1 bis 3, wobei die Schale mit wenigstens 10 elektrischen Pulsen, vorzugsweisen 10 bis 200 elektrischen Pulsen, besonders bevorzugt 30 bis 50 elektrischen Pulsen erweicht wird.

5. Verfahren nach einem der Ansprüche 1 bis 4, umfassend den weiteren Behandlungsschritt:
b) Konditionieren der Schalenfrüchte.

6. Verfahren nach Anspruch 5, wobei die Schalenfrucht (3) durch Anlegen eines Überdrucks und/oder einer Erhöhung der Temperatur und/oder durch Einwirken eines Konditionierungsmittels (11) konditioniert wird.

7. Verfahren nach einem der Ansprüche 5 bis 6, wobei der Schritt a) des Anlegens des elektrischen Feldes gleichzeitig mit oder vor dem Schritt b) des Konditionierens durchgeführt wird.

8. Verfahren nach einem der Ansprüche 6 bis 7, wobei im Schritt b) die Temperatur auf über 100° C, vorzugsweise auf 100° C bis 120° C erhöht wird, und/oder ein Überdruck von wenigstens 1 bar, vorzugsweise ein Überdruck von 1 bar bis 3 bar angelegt wird.

9. Verfahren nach einem der Ansprüche 5 bis 8, wobei die Behandlungsdauer in Schritt b) unter 40 Minuten, vorzugsweise unter 30 Minuten und besonders bevorzugt unter 20 Minuten beträgt.

10. Verfahren nach einem der Ansprüche 5 bis 9, wobei in Schritt b) eine Dampfbehandlung erfolgt.

11. Verfahren nach einem der Ansprüche 1 bis 10, umfassend wenigstens einen der folgenden, sich an die Behandlungsschritte a) und gegebenenfalls b) anschließenden Schritte:
c) Schälen der behandelten Schalenfrüchte (3);
d) Trocknen der Schalenfrüchte (3), vorzugsweise der geschälten Schalenfrüchte (3);
e) Entfernen einer Haut der Schalenfrüchte (3);
f) Abtrennen der Fruchtkerne vom Rest der Schalenfrucht (3);
g) Zerkleinern der Schalenfrüchte (3); und
h) Extraktion eines Inhaltsstoffes, vorzugsweise aus dem Rest der Schalenfrucht (3), wobei der Inhaltsstoff bevorzugt ein Öl ist.

12. Verfahren nach einem der Ansprüche 1 bis 11, wobei die Schalenfrucht (3) ausgewählt ist aus der Gruppe bestehend aus: Buchecker, Nuss, Kastanie, Edelkastanie (Maroni), Eichel, Mandel, Pistazie, Pinienkern, Kerne, Aprikosenkern, Kokosraspel, wobei die Schalenfrucht (3) vorzugsweise eine Nuss ist, die ausgewählt ist aus der Gruppe besteht aus: Haselnuss, Walnuss, Erdnuss, Hanfnuss, Macadamianuss, Platanennuss, Steinnuss, Wassernuss, Cashewnuss, Paranuss, Pekannus, Sheanuss, Marulanuss, Kokosnuss, Muskatnuss.

13. Vorrichtung (1) zur Behandlung von Schalenfrüchten (3), insbesondere zur Herstellung von Schalenfrüchten (3) mit verbesserten Schäleigenschaften im Vergleich zu unbehandelten Schalenfrüchten (3), umfassend eine luftdicht verschließbare Behandlungskammer (2) zur Konditionierung der Schalenfrüchte (3), und wenigstens einen Kondensator (4) zur Erzeugung eines nicht-thermisch wirkenden elektrischen Feldes in der Behandlungskammer (2), wobei der Kondensator wenigstens zwei Elektroden (5) umfasst, die mit einem Hochspannungsimpulsgenerator (8) verbunden sind, der elektrische Felder in Form von kurzen Pulsen im Mikro- bis Millisekundenbereich einer hohen Spannung im Kilovolt-Bereich erzeugt.

## Claims

1. A method for treating nuts (3), in particular for producing nuts (3) with improved shelling properties compared to untreated nuts (3), comprising the following step of treating the nuts (3):
a) softening a shell of the nuts (3) by applying an electric field, wherein the shell is non-thermally softened by means of short electric pulses in the range from microseconds to milliseconds of a high voltage in the kilovolt range.

2. The method according to claim 1, wherein by applying the electric field an energy input of at least 1 kJ/kg, preferably from 3 to 8 kJ/kg, is introduced into the nuts.

3. The method according to claims 1 or 2, wherein an electric field of 0.5 kV/cm to 2 kV/cm is applied.

4. The method according to any one of claims 1 to 3, wherein the shell is softened with at least 10 electrical pulses, preferably 10 to 200 electrical pulses, more preferably 30 to 50 electrical pulses.

5. The method according to any one of claims 1 to 4, comprising the following further treatment step:
b) conditioning the nuts.

6. Method according to claim 5, wherein the nut (3) is conditioned by applying a positive pressure and/or increasing the temperature and/or by the action of a conditioning agent (11).

7. The method according to any one of claims 5 to 6, wherein the step a) of applying an electric field is carried out simultaneously with or before the step b) of conditioning.

8. The method according to any one of claims 6 to 7, wherein in step b) the temperature is increased above 100 °C, preferably to 100 °C to 120 °C, and/or a positive pressure of at least 1 bar, preferably a positive pressure of 1 bar to 3 bar, is applied.

9. The method according to any one of claims 5 to 8, wherein the duration of the treatment in step b) is shorter than 40 minutes, preferably shorter than 30 minutes and particularly preferably shorter than 20 minutes.

10. The method according to any one of claims 5 to 9, wherein in step b) a steam treatment is carried out.

11. The method according to any one of claims 1 to 10, comprising at least one of the following steps after the treatment steps a) and optionally b):
c) shelling the treated nuts (3);
d) drying the nuts (3), preferably the shelled nuts (3);
e) removing a skin of the nuts (3);
f) separating the kernels from the rest of the nut (3);
g) crushing the nuts (3); and
h) extracting an ingredient, preferably from the remainder of the nut (3), the ingredient preferably being an oil.

12. The method according to any one of claims 1 to 11, wherein the nut (3) is selected from the group consisting of beechnut, walnut, chestnut, sweet chestnut, acorn, almond, pistachio, pine nut, kernels, apricot kernel, grated coconut, wherein the nut (3) is preferably a nut selected from the group consisting of hazelnut, walnut, peanut, hemp nut, macadamia nut, sycamore nut, ivory nut, water nut, cashew nut, Brazil nut, peka nut, shea nut, marula nut, coconut, nutmeg.

13. Apparatus (1) for treating nuts (3), in particular for producing nuts (3) with improved shelling properties as compared to untreated nuts (3), comprising a hermetically sealable treatment chamber (2) for conditioning the nuts (3) and at least one capacitor (4) for generating a non-thermally acting electric field in the treatment chamber (2), wherein the capacitor comprises at least two electrodes (5) connected to a high-voltage pulse generator (8) which generates electric fields in the form of short pulses in the range from microseconds to milliseconds of a high voltage in the kilovolt range.

## Revendications

1. Procédé de traitement de fruits à coque (3), en particulier pour produire des fruits à coque (3) ayant des propriétés de décorticage améliorées par rapport aux fruits à coque (3) non traités, comprenant l'étape suivante de traitement des fruits à coque (3) consistant à:
a) ramollir une coque des fruits à coque (3) par l'application d'un champ électrique, la coque étant ramollie de manière non thermique au moyen de courtes impulsions électriques de l'ordre de micro à millisecondes d'une haute tension de l'ordre du kilovolt.

2. Procédé selon la revendication 1, dans lequel, lors de l'application du champ électrique, un apport d'énergie d'au moins 1 kJ/kg, de préférence de 3 à 8 kJ/kg, est effectué dans les fruits à coque.

3. Procédé selon la revendication 1 ou 2, dans lequel un champ électrique de 0,5 kV/cm à 2 kV/cm est appliqué.

4. Procédé selon l'une quelconque des revendications 1 à 3, dans lequel la coque est ramollie par au moins 10 impulsions électriques, de préférence de 10 à 200 impulsions électriques, de manière particulièrement préférée de 30 à 50 impulsions électriques.

5. Procédé selon l'une quelconque des revendications 1 à 4, comprenant l'étape de traitement supplémentaire consistant à :
b) conditionner les fruits à coque.

6. Procédé selon la revendication 5, dans lequel le fruit à coque (3) est conditionné par l'application d'une surpression et/ou d'une augmentation de la température et/ou par l'action d'un agent de conditionnement (11).

7. Procédé selon l'une quelconque des revendications 5 à 6, dans lequel l'étape a) consistant à appliquer un champ électrique est réalisée simultanément ou avant l'étape b) de conditionnement.

8. Procédé selon l'une des revendications 6 à 7, dans lequel, à l'étape b), on augmente la température jusqu'à plus de 100°C, de préférence de 100°C à 120°C, et/ou on applique une surpression d'au moins 1 bar, de préférence une surpression de 1 bar à 3 bars.

9. Procédé selon l'une quelconque des revendications 5 à 8, dans lequel la durée du traitement à l'étape b) est inférieure à 40 minutes, de préférence inférieure à 30 minutes et de manière particulièrement préférée inférieure à 20 minutes.

10. Procédé selon l'une quelconque des revendications 5 à 9, dans lequel un traitement à la vapeur est effectué à l'étape b).

11. Procédé selon l'une quelconque des revendications 1 à 10, comprenant au moins l'une des étapes suivantes, faisant suite aux étapes de traitement a) et le cas échéant b) consistant à :
c) décortiquer des fruits à coque traités (3) ;
d) sécher des fruits à coque (3), de préférence des fruits à coque décortiqués (3) ;
e) retirer une peau des fruits à coque (3) ;
f) séparer les noyaux du reste du fruit à coque (3) ;
g) broyer des fruits à coque (3) ; et
h) extraire un ingrédient, de préférence du reste du fruit à coque (3), l'ingrédient étant de préférence une huile.

12. Procédé selon l'une quelconque des revendications 1 à 11, dans lequel le fruit à coque (3) est choisi dans le groupe constitué des : faines, noix, châtaignes, marrons (maroni), gland, amande, pistache, pignon, noyaux, noyau d'abricot, noix de coco râpée, le fruit à coque (3) étant de préférence une noix choisie dans le groupe constitué des : noisettes, noix, arachides, noix de chanvre, noix de macadamia, noix du platane, noix de tagua , châtaignes d'eau, noix de cajou, noix du Brésil, noix de pécan, noix de karité, noix de marulan, noix de coco, noix de muscade.

13. Dispositif (1) de traitement de fruits à coque (3), en particulier pour la production de fruits à coque (3) ayant des propriétés de décorticage améliorées par rapport aux fruits à coque (3) non traités, comprenant une chambre de traitement (2) pouvant être fermée de manière étanche à l'air pour le conditionnement des fruits à coque (3), et au moins un condensateur (4) pour générer un champ électrique à effet non thermique dans la chambre de traitement (2), le condensateur comprenant au moins deux électrodes (5) qui sont reliées à un générateur d'impulsions à haute tension (8) qui génère des champs électriques sous la forme d'impulsions courtes de l'ordre des micro aux millisecondes d'une haute tension de l'ordre du kilovolt.
